# FASCICULE DE BREVET EUROPEEN

(11) **EP 0 376 797 B1**
(45) Date de publication et mention de la délivrance du brevet: **18.08.1993**
(21) Numéro de dépôt: 89403534.4
(22) Date de dépôt: 19.12.1989
(51) Int. Cl.: C03B 35/20

(54) **Cadre de soutien d'une feuille de verre**
Glasscheibenhalterahmen
Glass sheet support frame

(30) Priorité: 21.12.1988 FR 8816892
(43) Date de publication de la demande: 04.07.1990
(73) Titulaire: SAINT-GOBAIN VITRAGE INTERNATIONAL, 92400 Courbevoie (FR)
(72) Inventeur: Mathivat, Denis, F-60150 Thourotte (FR); Petitcollin, Jean-Marc, F-60150 Thourotte (FR)
(74) Mandataire: Menes, Catherine

(56) Documents cités:
- EP-A- 0 062 814
- FR-A- 2 567 508
- FR-A- 2 572 388
- US-A- 4 093 083

## Description

La présente invention concerne un cadre de soutien d'une feuille de verre échauffée au delà de sa température de déformation, notamment un cadre destiné à récupérer une feuille de verre après son bombage et à la transférer de la cellule de formage à la cellule de trempe où elle subit un refroidissement intense sur ses deux faces afin d'améliorer certaines de ses caractéristiques mécaniques. L'invention s'applique notamment à la production de vitrages automobiles de sécurité tels des vitres latérales, des toits ouvrants ou des lunettes arrières.

Dans des procédés de bombage-trempe en position horizontale tels ceux décrits dans les demandes de brevets FR-A-2 085 464, 2 596 751, 2 567 508 ou EP-A-3 391, la feuille de verre est conduite au travers d'un four de réchauffage jusqu'à une unité de formage dans laquelle elle est déplacée verticalement pour venir en butée contre une forme supérieure de bombage dont elle épouse essentiellement les contours. La feuille de verre au moins partiellement conformée est ensuite relâchée sur un cadre de soutien alors encore appelé cadre de trempe qui la transfère vers le dispositif de trempe.

Dans les cas des publications précitées, la feuille de verre est maintenue contre la forme supérieure de bombage par des forces pneumatiques générées par un courant ascendant d'air chaud (FR-A-2 567 508) ou une aspiration (à la périphérie du vitrage conformément à l'enseignement des demandes de brevets FR-A-2 085 464 ou 2 596 751 ou par succion sur toute la surface du verre, EP-A-3 391). Pour faire passer la feuille de verre de la forme supérieure de bombage au cadre de trempe, on coupe les générateurs des forces pneumatiques de sorte que la feuille de verre n'est plus soumise qu'à son propre poids et la gravité la fait chuter sur le cadre de soutien. Toutefois, l'instant de la chute - ou plus précisément l'instant où la feuille de verre perd tout contact avec la forme supérieure de bombage - ne coïncide pas exactement avec celui de l'arrêt des forces pneumatiques. En effet, l'application de la feuille de verre contre la forme supérieure de bombage génère des forces de friction qui tendent à retenir la feuille de verre. Or, ces forces de friction sont d'amplitudes variables en fonction du galbe des formes de bombage supérieures - les forces de friction sont ainsi d'autant plus élevées que la forme de bombage se rapproche d'une forme en anse de panier - et aussi de l'usure de la feuille intercalaire de papier ou de tissu qui est habituellement utilisée pour recouvrir la forme supérieure de bombage et qui constitue en fait la surface de contact avec le verre.

Ce phénomène a pour conséquence que non seulement la feuille de verre tombe systématiquement avec un certain retard, mais encore avec un retard qui diffère d'un vitrage à l'autre. De ce fait, le temps de séjour de la feuille de verre sur le cadre de soutien est variable, si la chute de la feuille de verre se produit rapidement, ce temps de séjour est plus grand et le verre va se déformer sur le cadre de soutien ce qui crée un double bombage non désiré. Si par contre la chute est plus tardive, celle-ci peut se produire à contretemps, alors que le cadre de trempe est déjà en mouvement en direction de la cellule de trempe. La feuille est alors mal positionnée sur le cadre de trempe, ce qui a pour conséquence des défauts de qualité optique et/ou de trempe incomplète ; dans le pire des cas, la feuille de verre peut même ne pas être récupérée par le cadre ce qui pose le problème de l'évacuation de calcin sous la cellule de formage, surtout si on utilise un courant d'air chaud ascendant pour faire monter le vitrage.

Pour remédier à ces inconvénients, il est connu entre autres de la demande de brevet EP-A-3 392 de provoquer la chute de la feuille de verre non seulement en supprimant les forces qui la maintiennent contre la forme supérieure de bombage, mais aussi en les poussant par l'application d'une pression gazeuse. Ce procédé convient aux formes supérieures de bombage munies d'une pluralité d'orifices de succion ; on peut le mettre alors en oeuvre assez simplement en prévoyant des trompes d'aspiration susceptibles d'être inversées et en utilisant ces orifices de succion comme orifices de soufflage. Pour les autres types de formes supérieures, c'est-à-dire pour les formes supérieures non munies d'orifices de succion, sa mise en oeuvre devient beaucoup plus complexe car il faut prévoir un circuit de soufflage complémentaire.

La présente invention a pour objet un dispositif permettant d'obvier plus simplement les inconvénients précités.

Le dispositif selon l'invention est un dispositif de bombage constitué par une forme supérieure de bombage et un cadre de soutien ayant une forme adaptée au contour de la feuille, monté sur un chariot mobile et comportant, un dispositif de détection sans contact de la feuille de verre, la grandeur détectée étant convertie en impulsions électriques, et des moyens pour initialiser son mouvement en dépendance directe de ces impulsions électriques.

Le dispositif de conversion en impulsions électriques de la grandeur détectée est de préférence fixé sur le chariot mobile portant le cadre de soutien. Seuls le voltmètre et l'automate chargé d'enregistrer les signaux sont placés hors de l'enceinte de traitement du verre. Ils sont reliés au dispositif de conversion par un câble électrique souple, d'une longueur suffisante pour supporter tous les mouvements du chariot.

La grandeur détectée est par exemple la contre-pression induite par la réflexion sur la surface de la feuille de verre d'un jet de gaz sous pression ou un faisceau lumineux réfléchi.

Selon un premier mode de réalisation de l'invention, le dispositif de détection sans contact est un dispositif de détection pneumatique qui capte la variation de pression, d'un jet de gaz sous pression tel de l'air, lorsque le jet est coupé par la présence de la feuille de verre.

De préférence, la pression d'alimentation du jet d'air comprimé est choisie de manière à ce que la variation de pression captée soit comprise entre 10 et 300 Pascals. Des résultats très satisfaisants sont obtenus si la variation de pression est de l'ordre de 200 Pascals. Les pressions de travail sont alors très faibles ce qui supprime avantageusement tout risque de marquage du verre par impact du jet.

De plus, le gaz sous pression est de préférence envoyé à une température sensiblement égale à la température du verre, c'est-à-dire à la température de la cellule de formage. Ainsi la détection n'a aucune influence sur le vitrage.

La détection est obtenue par une mesure de réflexion de la différence de pression. L'émission du jet de gaz sous pression est effectuée sur les bords du cadre de trempe, vers la surface porteuse de verre, le jet est dirigé selon une direction essentiellement perpendiculaire à la surface du verre.

La mesure de la détection est réalisée par un capteur, à savoir un transmetteur de pression différentielle dont le tube d'alimentation est monté coaxialement au tube d'émission de gaz sous pression.

Un détecteur conforme à ce premier mode de réalisation est par exemple constitué d'un émetteur comportant une source de gaz sous pression, éventuellement une unité de filtrage de l'air, une unité de régulation de la pression, un organe de chauffage de l'air et un organe d'émission. De préférence l'organe d'émission est constitué par une buse en forme de couronne montée à l'extrémité d'un tube et au centre de laquelle vient se loger le tube récepteur relié au transmetteur de pression différentielle qui convertit la mesure de pression en un signal électrique envoyé pour traitement vers un automate. Dans ce cas, les meilleurs résultats sont observés pour un écart entre la tête de la buse et le verre de l'ordre de 2 mm . La tête de la buse est avantageusement placée dans un logement prévu dans le cadre de soutien.

Selon un second mode de réalisation de l'invention, le dispositif de détection sans contact est un dispositif de détection de la réflexion par la feuille de verre d'un faisceau lumineux. Le faisceau lumineux est conduit de sa source à la proximité de la feuille de verre puis après réflexion de la feuille de verre au capteur photoélectrique par un guide d'onde du type fibre optique à sortie radiale. De préférence, la fibre optique est munie d'un circuit de refroidissement.

De préférence, le trajet libre du rayon lumineux, c'est-à-dire hors de la fibre optique est d'au plus 60 mm (aller-retour). La fibre est avantageusement fixée sous le cadre de soutien.

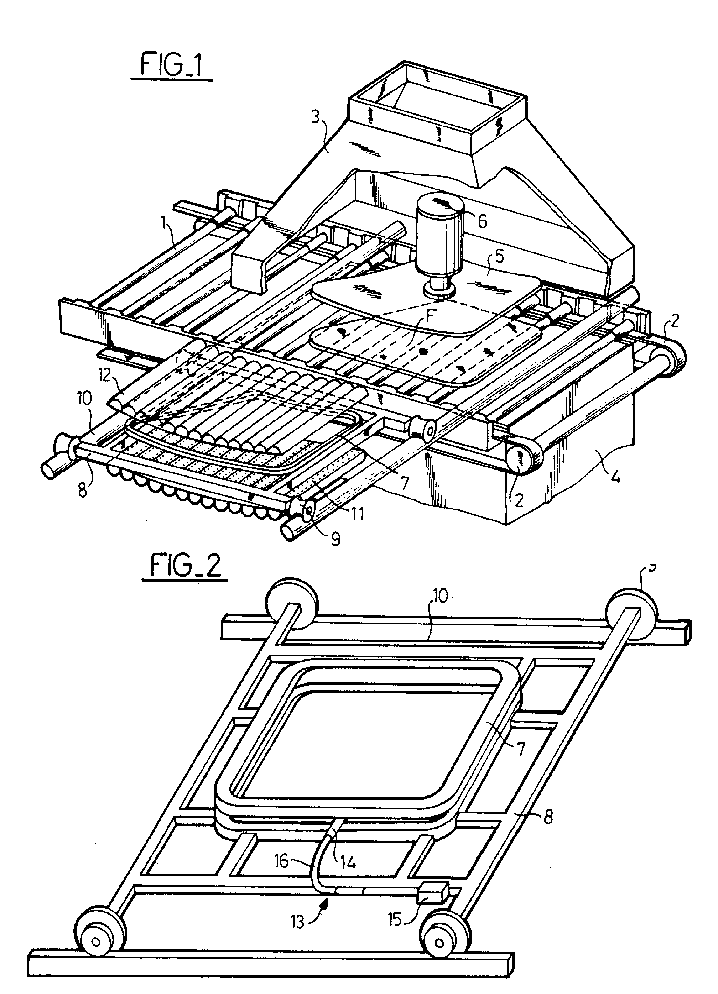

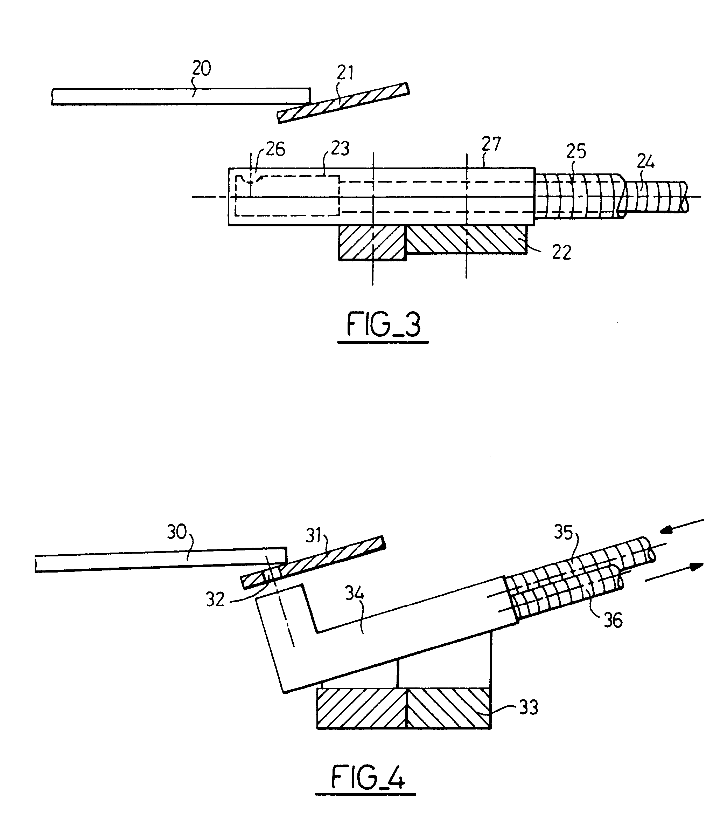

D'autres détails et caractéristiques avantageuses de l'invention sont décrits en référence aux dessins annexés qui représentent :
. **figure 1** : un schéma vu en perspective d'une installation de bombage-trempe,
. **figure 2** : un cadre de soutien selon l'invention,
. **figure 3** : le cadre de la figure 2 avec un dispositif de détection par fibres optiques,
. **figure 4** : le cadre de la figure 2 avec un dispositif de détection de type pneumatique.

A la figure 1, on a représenté quelques éléments constitutifs d'une ligne de bombage-trempe en position horizontale, en vue de l'obtention de vitrages automobiles de sécurité. Depuis un four tunnel ici non schématisé, les feuilles de verre F sont conduites une à une par le convoyeur 1 constitué par un lit de rouleaux entraînés par des courroies 2. Elles viennent s'immobiliser sous une forme supérieure 5 de bombage dont le côté faisant face au convoyeur est recouvert d'une feuille de papier ou de tissu. La forme supérieure 5 de bombage est mobile le long de son axe vertical grâce à des éléments de treuillage ici non représentés. Elle est placée dans un caisson 3 sans fond isolé thermiquement. Dans le cas ici figuré, la feuille de verre est soulevée pour venir en butée contre le côté inférieur de la forme supérieure de bombage au moyen d'un courant d'air chaud provenant du caisson inférieur 4. Dans d'autres cas, la feuille de verre F est soulevée par aspiration. Dès que la feuille de verre F est en contact avec la forme supérieure 5 de bombage, celle-ci est relevée au moyen d'un dispositif approprié 6, ce qui permet d'intercaler entre le convoyeur et la feuille de verre F un cadre de soutien 7 servant ici de cadre de récupération et de trempe monté sur un chariot 8 équipé de roues 9 roulant sur des rails 10 ici perpendiculaires à l'axe du convoyeur et dans d'autres installations parallèles à celui-ci. Ces rails mènent le chariot jusqu'à une cellule de trempe comportant des caissons inférieur 11 et supérieur 12 pour souffler de l'air froid sur les deux faces des feuilles de verre F afin de les refroidir intensément et d'améliorer leurs propriétés de résistance mécanique. Dans le cas ici représenté, le transfert de la feuille de verre F de sa position haute, en contact avec le côté inférieur de la forme supérieure, à sa position basse posée sur le cadre de soutien, s'effectue sous l'effet de la gravité, la pression du courant ascendant d'air chaud étant ramenée à zéro ou au moins à une valeur insuffisante pour compenser le poids du vitrage.

Toutefois, même si la variation de la pression générant les forces d'application de la feuille de verre contre la forme supérieure de bombage peut être considérée comme instantanée et en tout cas comme parfaitement reproductible, il n'en est pas de même de la chute de la feuille de verre. En effet, son contact avec la feuille intercalaire de papier ou de tissu se fait avec un certain frottement ce qui crée des forces de friction dont les amplitudes varient notamment en fonction de l'état de surface de la feuille intercalaire et aussi en fonction de la courbure de la forme supérieure de bombage ; ces forces de friction entraînent un certain retard de la chute de la feuille de verre. En conséquence, si l'instant où le cadre de soutien se met en branle est défini uniquement en référence à l'instant de la variation de pression des forces pneumatiques appliquant le verre contre la forme supérieure, on observe une variation du temps de transfert, c'est-à-dire du temps s'écoulant entre la prise en charge de la feuille de verre par le cadre de soutien et le début du soufflage de trempe. Cette variation du temps de transfert est de l'ordre de quelques dizièmes de secondes : or, à ce stade du procédé de fabrication d'un vitrage, la température du verre est comprise entre 650 et 700°C. La plasticité du verre est donc encore grande et ces quelques dizièmes de seconde en plus ou en moins sont suffisants pour entraîner une déformation du vitrage, et notamment la formation d'un double bombage qui affecte la qualité optique du vitrage.

Ces problèmes sont résolus si conformément à l'invention et comme illustré à la figure 2, le cadre de soutien 7 est équipé d'un dispositif 13 de détection de la présence du verre. Les commandes de mouvement du cadre de soutien sont alors initialisées directement par le contact réel de la feuille de verre et du cadre de trempe ce qui permet de définir un temps de transfert parfaitement constant et donc améliore la reproductibilité du formage. La détection peut être éventuellement légèrement anticipée, c'est-à-dire que l'on repère la feuille de verre lors de sa chute.

Le dispositif de détection est fixé sur le chariot 8, la tête de détection 14 émergeant à une faible distance de la feuille de verre. De préférence, tout l'équipement 15 nécessaire à la transformation du signal détecté en impulsions électriques est embarqué sur le chariot 8 et est relié par un câble approprié 16 à la tête de détection. Un câble électrique ici non représenté et avec suffisamment de battements pour supporter tous les mouvements du chariot 8, relie le chariot 8 à un dispositif de traitement des signaux électriques placé lui à l'extérieur de l'unité de traitement thermique du verre.

Selon un premier exemple de réalisation de l'invention schématisé à la figure 3, la détection est obtenue par des moyens optiques.

Sur cette figure, vue en coupe, on a représenté la feuille de verre 20 posée sur le cadre 21 de soutien et de trempe de préférence revêtu d'un tissu en fils métalliques à larges mailles pour favoriser l'évacuation de l'air lors de la trempe. Ce cadre 21 est fixé par des moyens ici non représentés sur le chariot 22.

Le chariot 22 comporte un logement 23 dans lequel on adapte un détecteur opto-électronique du type fibre optique 24 entourée d'une gaine 25 dans laquelle on fait circuler un fluide de refroidissement tel que de l'air comprimé. L'ensemble est positionné de façon précise par un dispositif de fixation mécanique.

La fibre optique comporte une tête de sortie radiale 26 entourée d'un étui de protection et de fixation 27 et son positionnement est tel que le faisceau lumineux émerge perpendiculairement à la feuille de verre. La distance entre la tête de sortie 26 et la feuille de verre 20 - lorsque celle-ci est détectée, c'est-à-dire quand elle est posée sur le cadre ou un peu avant sa dépose - est de préférence inférieure à 30 mm de sorte que le trajet libre aller-retour du faisceau lumineux soit d'une longueur de préférence inférieure à 60 mm.

Suivant la sensibilité de la fibre choisie - -c'est-à-dire notamment en fonction du nombre de fibres formant le faisceau lumineux et de sa convergence -, on peut faire varier la distance à laquelle le verre est détecté. Il peut être en effet avantageux de détecter la feuille de verre avant même qu'elle ne soit reçue par le cadre 21. Mais bien sûr, après qu'elle ait quitté la forme supérieure de bombage, ceci afin d'anticiper certains mouvements.

La cellule de transformation du faisceau lumineux en impulsions électriques est fixée sur le chariot 22 et cette dernière est transmise par un câble électrique souple à un voltmètre relié à un automate programmable eux-mêmes sis hors de l'enceinte chaude de bombage-trempe.

Dans un second exemple de réalisation de l'invention représenté schématiquement à la figure 4, la détection est obtenue par un détecteur pneumatique.

Pour ce faire, le cadre de soutien 31 de la feuille de verre 30 est percé d'un orifice 32 pour le passage de l'air comprimé ou de tout autre fluide détecteur. La buse détectrice 34 est fixée sur le chariot 33 et est reliée par des câbles 35 et 36 respectivement à une source émettrice et un capteur d'air comprimé.

Le réglage de l'alimentation en air comprimé s'effectue par exemple au moyen de détenteur, d'un régulateur de haute précision et d'un micromanomètre à affichage numérique. L'air est épuré par passage d'un préfiltre puis un filtre déshuileur. De préférence, l'alimentation comporte également une unité de chauffage de l'air.

La buse est également connectée à un capteur, fixé sur le chariot et constitué d'une canalisation de retour et d'un transmetteur. Lorsqu'une feuille de verre 30 est reçue par le cadre de soutien 31, sa présence induit une contre-pression transformée par le transmetteur en une impulsion électrique. Celle-ci est alors transmise par le câble électrique à un voltmètre de précision et le signal enregistré mesuré est transmis à un automate programmable.

De façon plus détaillée et décrite dans la demande de brevet FR-A-2 632 949 déposée le 17 juin 1988 au nom de la demanderesse, la buse comporte une embase sur laquelle est vissé un corps muni de pas de vis pour la fixation de la buse sur le cadre de trempe. L'embase est pourvue d'alésages au niveau desquels sont soudées les extrémités des canalisations d'amenée et de retour de l'air comprimé, en prévoyant des pièces de dilatation.

L'embase est évidée en son centre pour former un canal et l'ouverture est coudée pour venir déboucher vers celui-ci. La buse comporte également un conduit fixé à une de ses extrémités sur l'embase, au niveau du canal et à l'autre de ses extrémités à un chapeau. Les parois de ce conduit et du corps forment la buse d'émission en forme de couronne. Ainsi le jet d'air comprimé est soufflé au travers d'une couronne annulaire ce qui limite son impact sur le verre. La canalisation de retour reçoit par le conduit, le canal et le coude, la contre-pression induite par la pose d'une feuille de verre sur le cadre de trempe.

Avantageusement, l'air comprimé est émis avec une pression de l'ordre de 4 kilopascals, de sorte que pour une distance buse/verre de l'ordre de 2 mm, la différence de pression induite par le passage du vitrage soit de l'ordre de 10 à 200 Pascals. Comme l'air est chaud et que son impact sur le verre est réduit par la forme annulaire de la buse, il ne se produit ainsi aucun marquage de la feuille de verre.

Le temps de présence du chariot dans l'enceinte chaude de bombage est faible et entre deux vitrages, le chariot et le cadre de trempe sont intensément refroidis par le soufflage de trempe de sorte que le transmetteur n'est jamais échauffé au-delà d'une température critique pour son fonctionnement.

## Revendications

1. Dispositif de bombage d'une feuille de verre (F) comportant une forme supérieure de bombage (5) et un cadre de soutien ayant une forme adaptée au contour de la feuille de verre et monte sur un chariot mobile (8), **caractérisé en ce que** le cadre de soutien (7) comporte un dispositif de détection (13) de la feuille de verre (F), sans contact, la grandeur détectée étant convertie en impulsions électriques, et des moyens pour initialiser son mouvement en dépendance directe desdites impulsions électriques.

2. Dispositif selon la revendication 1, **caractérisé en ce que** le dispositif de conversion en impulsions électriques de la grandeur détectée est fixe sur le chariot mobile (8) et est relié à un voltmètre de précision placé hors de l'enceinte de traitement du verre.

3. Dispositif selon la revendication 1 ou 2, **caractérisé en ce que** la grandeur détectée est une contre-pression induite par la réflexion sur la surface de la feuille de verre d'un jet de gaz sous pression notamment d'air comprimé.

4. Dispositif selon la revendication 1 ou 2, **caractérisé en ce que** la grandeur détectée est un faisceau lumineux réfléchi par la surface du verre.

5. Dispositif selon la revendication 4, **caractérisé en ce que** le faisceau lumineux est conduit par un guide d'ondes du type fibre optique.

6. Dispositif selon la revendication 4, **caractérisé en ce que** le faisceau lumineux est conduit par un guide d'ondes du type à fibre optique à sortie radiale (26).

7. Dispositif selon la revendication 5, **caractérisé en ce que** le trajet libre du faisceau lumineux est d'au plus 60 mm.

8. Dispositif suivant la revendication 6, **caractérisé en ce que** le faisceau lumineux est émis perpendiculairement à la feuille de verre.

9. Dispositif suivant l'une des revendications 1 à 7, **caractérisé en ce que** le dispositif de détection a une sensibilité telle qu'il détecte la feuille de verre avant qu'elle ne soit déposée sur le cadre de soutien.

## Patentansprüche

1. Vorrichtung zum Biegen einer Glasscheibe (F) mit einer oberen Biegeform (5) und einem Halterahmen mit einer dem Umriß der Glasscheibe angepaßten Form, der auf einem beweglichen Wagen (8) angeordnet ist, **dadurch gekennzeichnet, daß** der Halterahmen (7) eine Einrichtung (13) zum kontaktlosen Erfassen der Glasscheibe (F) aufweist, wobei die erfaßte Größe in elektrische Impulse umgewandelt wird, und eine Einrichtung zum Initialisieren seiner Bewegung in direkter Abhängigkeit von den elektrischen Impulsen umfaßt.

2. Vorrichtung nach Anspruch 1, **dadurch gekennzeichnet, daß** die Einrichtung zur Umwandlung der erfaßten Größe in elektrische Impulse auf dem beweglichen Wagen (8) befestigt und mit einem außerhalb des Glasbearbeitungsraumes angeordneten Präzisions-Voltmeter verbunden ist.

3. Vorrichtung nach Anspruch 1 oder 2, **dadurch gekennzeichnet, daß** die erfaßte Größe ein durch die Reflexion eines unter Druck stehenden Gas-Strahls, insbesondere eines Druckluft-Strahls auf die Oberfläche der Glasscheibe hervorgerufener Gegendruck ist.

4. Vorrichtung nach Anspruch 1 oder 2, **dadurch gekennzeichnet, daß** die erfaßte Größe ein von der Glasfläche reflektierter Lichtstrahl ist.

5. Vorrichtung nach Anspruch 4, **dadurch gekennzeichnet, daß** der Lichtstrahl von einem Lichtleitfaser-artigen Wellenleiter gelenkt wird.

6. Vorrichtung nach Anspruch 4, **dadurch gekennzeichnet, daß** der Lichtstrahl von einem Lichtleitfaser-artigen Wellenleiter mit radialem Ausgang (26) gelenkt wird.

7. Vorrichtung nach Anspruch 5, **dadurch gekennzeichnet, daß** der freie Weg des Lichtstrahls höchstens 60 mm beträgt.

8. Vorrichtung nach Anspruch 6, **dadurch gekennzeichnet, daß** der Lichtstrahl senkrecht zur Glasscheibe ausgesandt wird.

9. Vorrichtung nach einem der Ansprüche 1 bis 7, **dadurch gekennzeichnet, daß** die Erfassungseinrichtung eine derartige Empfindlichkeit besitzt, daß sie die Glascheibe erfaßt, bevor sie auf dem Halterahmen abgelegt wird.

## Claims

1. Device for bending a glass sheet (F), comprising an upper bending mould (5) and a support frame having a shape adapted to the contour of the glass sheet and mounted on a movable carriage (8), characterized in that the support frame (7) comprises a detection device (13) for contactless detection of the glass sheet (F), the value detected being converted into electrical pulses, and comprises means for initializing its movement in direct dependence upon said electrical pulses.

2. Device according to Claim 1, characterized in that the device for converting the value detected into electrical pulses is fixed on the movable carriage (8) and is connected to a high-accuracy volt meter situated outside the treatment enclosure for the glass.

3. Device according to Claim 1 or 2, characterized in that the value detected is a counter-pressure induced by the reflection from the surface of the glass sheet of a jet of pressurized gas, notably of compressed air.

4. Device according to Claim 1 or 2, characterized in that the value detected is a light pencil reflected from the surface of the glass.

5. Device according to Claim 4, characterized in that the light pencil is conducted through a wave guide of the fibre optics type.

6. Device according to Claim 4, characterized in that the light pencil is conducted through a wave guide of the fibre optics type having a radial outlet (26).

7. Device according to Claim 5, characterized in that the free path of the light pencil is at most 60 mm.

8. Device according to Claim 6, characterized in that the light pencil is emitted perpendicularly to the glass sheet.

9. Device according to one of Claims 1 to 7, characterized in that the detection device has a sensitivity such that it detects the glass sheet before it is deposited on the support frame.
